# FASCICULE DE BREVET EUROPEEN

(11) **EP 0 857 199 B1**
(45) Date de publication et mention de la délivrance du brevet: **14.08.2002**
(21) Numéro de dépôt: 96932397.1
(22) Date de dépôt: 04.10.1996
(51) Int. Cl.: C11B 7/00, C11B 15/00, C11C 1/08, B01D 9/00

(54) **PROCEDE DE CRISTALLISATION DE MATIERES GRASSES ET INSTALLATION POUR LA MISE EN OEUVRE DE CE PROCEDE**
VERFAHREN UND ANLAGE ZUM KRISTALLISIEREN VON FETTSTOFFEN
FAT CRYSTALLISATION METHOD AND APPARATUS THEREFOR

(30) Priorité: 19.10.1995 BE 9500871
(43) Date de publication de la demande: 12.08.1998
(73) Titulaire: Tirtiaux, Alain, 5020 Temploux (BE); Tan, Chee Hong, Shah Alam (Selangor) (MY)
(72) Inventeur: Tirtiaux, Alain, 5020 Temploux (BE); Tan, Chee Hong, Shah Alam (Selangor) (MY)
(74) Mandataire: Schmitz, Yvon
(86) Numéro de dépôt international: BE9600106
(87) Numéro de publication internationale: WO9714777

(56) Documents cités:
- EP-A- 0 198 538
- GB-A- 2 234 918
- US-A- 2 800 493
- US-A- 3 633 883
- PATENT ABSTRACTS OF JAPAN vol. 16, no. 265 (C-0951), 16 Juin 1992 & JP 04 063896 A (NOBORU YAMADA), 28 Février 1992,
- PATENT ABSTRACTS OF JAPAN vol. 15, no. 369 (C-0868), 18 Septembre 1991 & JP 03 146595 A (NOBORU YAMADA), 21 Juin 1991,
- DATABASE WPI Week 8342 Derwent Publications Ltd., London, GB; AN 83-791763 XP002006119 & JP 58 152 097 A (SNOW BRAND MILK PRODUCTS) , 9 Septembre 1983
- DATABASE WPI Week 9048 Derwent Publications Ltd., London, GB; AN 90-360315 XP002006120 & SU 1 558 970 A (AVTOMATIKA PRODN CO) , 23 Avril 1990
- FETT WISSENSCHAFT TECHNOLOGIE- FAT SCIENCE TECHNOLOGY, vol. 93, no. 11, 1991, LEINFELDEN ECHTERDINGEN DE, pages 432-439, XP000236784 A. TIRTIAUX: "Trockene Mehrfachfraktionierung - Ein kostengünstiges Umwandlungsverfahren"

## Description

La présente invention a pour objet un procédé de cristallisation de matières grasses, en particulier de graisses lauriques et d'acides gras lauriques ou non pour leur fractionnement ultérieur notamment par filtrage sous pression.

Dans le domaine des matières grasses alimentaires, la partie qui concerne la substitution totale ou partielle du beurre de cacao fait l'objet de nombreuses recherches, ceci étant dû principalement au prix élevé du beurre de cacao, dont la caractéristique principale réside dans sa capacité de fusion totale à la température du corps humain alors qu'il reste suffisamment solide et manipulable en dessous de celle-ci. L'utilisation principale du beurre de cacao est la confiserie et la chocolaterie, mais le marché des excipients en pharmacologie n'est pas négligeable.

Les produits de substitution du beurre de cacao sont classés en deux grandes catégories, suivant qu'ils sont de type laurique ou non, c'est-à-dire selon qu'ils sont produits ou non à partir de graisses riches en acides gras lauriques.

L'invention concerne en particulier les produits de substitution de type laurique et en particulier aux graisses, plutôt qu'aux huiles, étant donné que les caractéristiques physiques des produits en question rangent généralement ceux-ci dans la catégorie des graisses.

Toutefois, l'invention concerne également la production d'acides gras fractionnés de type laurique ou non qui puissent substituer à moindre coût les acides gras distillés.

La graisse la plus utilisée pour la fabrication d'un substitut de type laurique est sans conteste la graisse de palmiste, qui est extraite de l'amande de la noix de palme. D'autres graisses exotiques comme l'huile de coco, la graisse de karité, les graisses provenant des amandes de cuphea, de babassu, de mangue ou de sal peuvent également être utilisées.

En ce qui concerne la graisse de palmiste, pour obtenir, à partir de celle-ci, un produit semblable au beurre de cacao, la graisse de palmiste est fractionnée pour en retirer une partie solide. A partir d'une graisse de palmiste dont l'indice d'iode est environ de 17 à 19, le but du fractionnement est d'obtenir une partie solide dont l'indice d'iode ne dépasse pas 7. Dans ce domaine, l'utilisation de l'indice d'iode, c'est-à-dire de la mesure du degré d'insaturation de la graisse, est assez répandue car il se fait rapidement et donne une bonne approximation de la qualité des produits. D'autres analyses relatives à la composition des produits et à leur comportement physique sont utilisées pour une définition plus pointue.

Pour ce faire, les procédés de fractionnement des matières grasses actuellement utilisés sont de quatre types différents, à savoir :
- Procédé suivant lequel la matière grasse est additionnée d'un solvant, en général de l'acétone. Ensuite, le miscella est réfrigéré par convection ou évaporation jusqu'à germination et croissance de cristaux au sein du miscella. Après stabilisation de ces cristaux par tempérage, ceux-ci sont séparés de la partie fluide par filtration, décantation ou autre procédé de séparation.
- Procédé suivant lequel la matière grasse est cristallisée sans solvant par refroidissement pour être ensuite additionnée d'un agent tensioactif qui permet la séparation par centrifugation de la partie cristallisée, ce procédé étant connu sous le nom de procédé Lanza.
- Procédé suivant lequel la matière grasse est cristallisée et solidifiée dans des plateaux placés en chambre froide ou véhiculés dans des tunnels de réfrigération, les plaques de matière grasse solidifiée étant alors introduites dans des sacs filtrants qui sont ensuite empilés dans la cage d'une presse hydraulique. Grâce à la haute pression disponible, la partie molle de la matière grasse est exsudée jusqu'à ce que la qualité de sa partie dure restant dans la presse est celle voulue. L'empilement des sacs filtrants est alors défait et les gâteaux constitués par la partie dure susdite sont alors débâtis.
- Procédé utilisé par FUJI OIL suivant lequel la matière grasse est partiellement solidifiée dans une cuve de cristallisation jusqu'au point où la matière grasse se trouve à la limite des possibilités du pompage, en état de surfusion. Elle est alors introduite par pompage dans les chambres d'un filtre-presse équipé de plateaux à parois réfrigérées, munis de membranes. Après introduction de la matière grasse dans le filtre, celle-ci y est laissée le temps nécessaire à sa solidification et à la stabilisation de la phase cristalline. Ensuite, une pression importante, de 2500 à 7000 KPa suivant les cas, est appliquée sur la face arrière de chaque membrane afin d'exsuder la partie fluide de la matière grasse. La pression est ensuite relâchée et le filtre est ouvert pour débâtir les gâteaux de matière solide.

De ces quatre procédés connus, c'est le dernier qui se développe le plus, compte tenu du fait que les coûts des trois premiers procédés sont élevés, à savoir : coûts énergétiques occasionnés par la récupération du solvant et coût de remplacement du solvant perdu pour le premier procédé; coûts de l'agent tensioactif et coûts des pertes de matière grasse pour le second procédé et coût de la main d'oeuvre pour le troisième procédé.

Toutefois, avec le quatrième procédé connu précité, malgré les avantages qu'il présente par rapport aux trois premiers procédés, on rencontre également des difficultés au niveau du contrôle de la cristallisation de la matière grasse et au niveau du transfert de la masse cristallisée dans le filtre pour en remplir toutes les chambres et pour éviter des cassures de plateaux par compression sur des chambres de filtre vides ou partiellement vides.

L'invention a pour but d'apporter une solution simple et efficace aux difficultés précitées qui se présentent lors de la mise en oeuvre du quatrième procédé susdit.

A cet effet, le procédé suivant l'invention, consiste à fondre la matière grasse, à diviser la masse fondue en billes les plus homogènes possibles et de dimensions les plus régulières possibles, à introduire ces billes dans une solution aqueuse préalablement réfrigérée à une température inférieure à celle du point de fusion de la matière grasse, à ajuster la concentration de matière grasse par rapport à la solution aqueuse en fonction de la capacité de celle-ci à absorber la quantité de chaleur nécessaire à la solidification des billes de matière grasse, à régler le débit d'introduction desdites billes dans la solution précitée pour que chaque bille de matière grasse soit soumise instantanément à un échange thermique billes/solution aqueuse qui provoque rapidement la solidification de la surface des billes et progressivement de toute leur masse, à maintenir les billes de matière grasse en suspension dans ladite solution aqueuse, à ajuster la température du mélange billes/solution pour permettre la stabilisation de la cristallisation de chaque bille, à maintenir ladite température du mélange jusqu'à la stabilisation complète de la cristallisation susdite, à transférer ensuite le mélange billes/solution à l'endroit de filtrage dont les surfaces en contact avec ledit mélange sont maintenues à une température proche de celle de ce dernier, à séparer sous faible pression les billes de matière grasse de la solution aqueuse et à extraire enfin desdites billes de matière grasse, sous forte pression, la partie liquide de la matière grasse.

L'invention a également pour objet une installation pour la mise en oeuvre du procédé susdit.

Suivant l'invention, cette installation comprend une enceinte à cristalliser raccordée à une source de matière grasse fondue, à une source de solution aqueuse agencée pour que la température de la solution soit réglable et à un filtre-presse, équipé de plateaux dont les parois sont agencées pour pouvoir être portées à une température déterminée, des moyens disposés dans l'enceinte, à proximité de l'endroit où la matière grasse fondue est introduite dans celle-ci, et agencés pour diviser cette matière grasse en billes, des moyens agencés pour régler le débit d'introduction de la matière grasse fondue dans l'enceinte et la concentration des billes de matière grasse dans la solution aqueuse, des moyens agencés dans l'enceinte pour maintenir les billes de matière grasse en suspension dans la solution aqueuse, des moyens prévus dans l'enceinte, connectés à une source externe de fluide réfrigérant, qui sont agencés pour maintenir la température du mélange billes de matière grasse/solution aqueuse à une valeur déterminée et des moyens agencés pour permettre le transfert du mélange susdit de l'enceinte ou filtre.

D'autres détails et particularités de l'invention ressortiront de la description des dessins annexés au présent mémoire et qui, à titre d'exemples non limitatifs, illustrent le procédé suivant l'invention et représentent l'installation pour la mise en oeuvre de ce procédé.

La figure 1 est une vue très schématique qui illustre le procédé et montre l'installation suivant l'invention.

La figure 2 est une vue schématique, en élévation et avec brisures partielles, de l'enceinte de cristallisation de l'installation susdite.

Les figures 3, 4 et 5 sont des vues de détail, en perspective et avec brisures partielles, montrant des variantes de l'enceinte de cristallisation représentée à la figure 2.

Les figures 6, 7, 8 et 9 sont des vues schématiques, en élévation et en coupe, d'un élément de filtre de l'installation suivant l'invention, la figure 6 montrant cet élément vide et en attente de son alimentation en mélange billes de graisse/solution aqueuse susdit, la figure 7 montrant cette alimentation tandis que les figures 8 et 9 montrent respectivement la compaction dudit mélange et la décharge des gâteaux de matière solide.

Dans les différentes figures, les mêmes notations de référence désignent des éléments identiques ou analogues.

On notera tout d'abord, dans le cadre de la présente invention que l'expression "matière grasse" a une signification aussi large que possible et comprendra par conséquent aussi bien les graisses contenant des acides gras que les acides gras en tant que tels, que ces graisses et acides gras soient de nature laurique ou non. Toutefois, le procédé de l'invention, ainsi qu'on l'a précisé précédemment, convient particulièrement bien au traitement des graisses lauriques et des acides gras lauriques ou non.

Le procédé suivant l'invention et illustré aux dessins est plus particulièrement destiné à la cristallisation de graisses de type laurique, dans une solution aqueuse, en vue de leur fractionnement ultérieur par filtrage sous pression, avec récupération de cette solution aqueuse lors du filtrage. Ce procédé consiste tout d'abord, en 1, à fondre les graisses et à diviser, en 2, la masse de graisse fondue 3 en billes 4 les plus régulières possibles que l'on introduit dans une solution aqueuse 5 préalablement réfrigérée à une température inférieure à celle du point de fusion de la graisse. On ajuste la concentration des billes de graisse par rapport à la solution aqueuse, en fonction de la capacité de celle-ci à absorber la quantité de chaleur nécessaire à la solidification des billes de graisse et on règle, en 6, le débit d'introduction des billes 4 dans la solution 5 pour que chaque bille de graisse soit soumise instantanément à un échange thermique billes/solution aqueuse qui provoque rapidement la solidification de la surface des billes et progressivement de toute leur masse. On maintient les billes de graisse en suspension, en 7, dans la solution aqueuse et on ajuste la température du mélange billes/solution 8 pour permettre la stabilisation de la cristallisation de chaque bille et on maintient cette température du mélange, en 7, jusqu'à la stabilisation complète de la cristallisation susdite. On transfère ensuite le mélange billes/solution, par exemple par pompage 9, à l'endroit de filtrage 10 dont les surfaces en contact avec ledit mélange sont maintenues à une température proche de celle de ce dernier. On sépare tout d'abord, sous faible pression, les billes de graisse de la solution aqueuse et ensuite on extrait enfin desdites billes de graisse, sous forte pression, la partie liquide de la graisse.

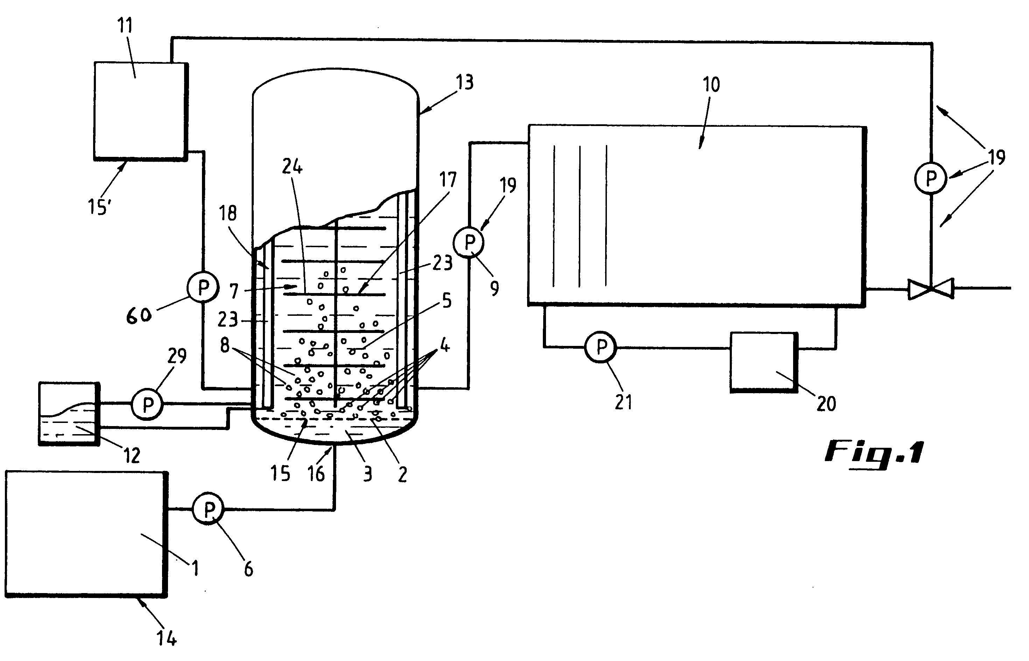

Dans le procédé illustré à la figure 1, la cristallisation des billes de graisse 4 s'effectue en discontinu en introduisant, en 7 et pour former le mélange billes/solution aqueuse, un volume donné de billes de graisse dans un volume donné de solution aqueuse, qui est préparée en 11 et où elle est recyclée après filtrage dudit mélange. Après formation dudit mélange, celui-ci est maintenu, comme exposé ci-dessus, en 7 jusqu'à cristallisation complète des billes de graisse. Ce n'est que lorsque cette cristallisation est stabilisée que le mélange est transféré à l'endroit de filtrage.

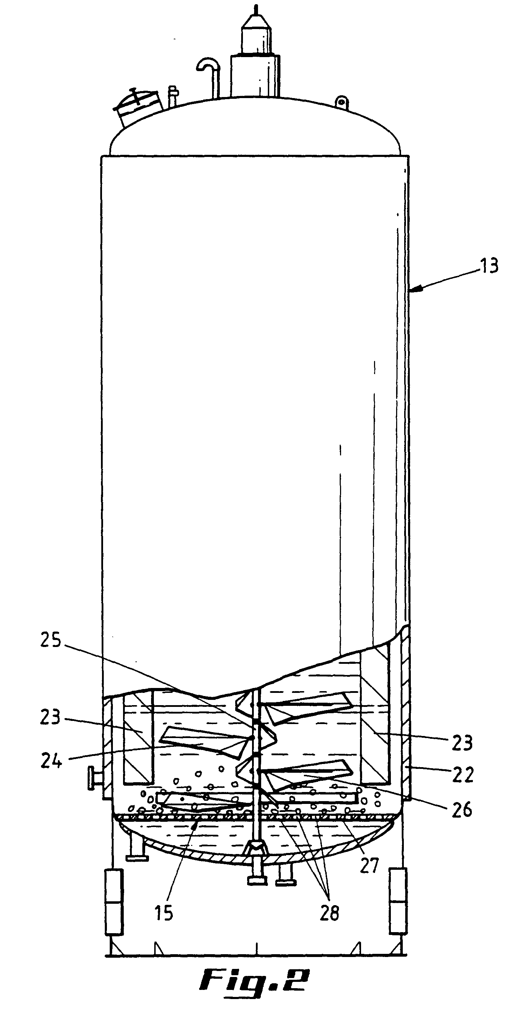

Suivant l'invention, on pourrait également prévoir de cristalliser les billes de graisse du mélange susdit en continu et ce, en faisant circuler la solution aqueuse réfrigérée à contre-courant par rapport au flux des billes de graisse jusqu'à la stabilisation de la cristallisation desdites billes, qui sont maintenues en suspension dans la solution aqueuse. Un moyen avantageux pour ce faire serait d'introduire la graisse fondue au bas d'une colonne verticale, au travers d'un dispositif de division de la graisse en billes tel qu'illustré par l'une des figures 2, 3, 4 ou 5. La colonne verticale est alors parcourue par un flux de la solution aqueuse, allant du haut vers le bas de la colonne, de façon continue ou pulsée. Les billes formées et progressivement solidifiées sont alors animées d'un mouvement ascensionnel dû à leur poids spécifique inférieur à celui de la solution. Le mélange billes/solution s'écoule ensuite par débordement dans le haut de la colonne dans une enceinte de stabilisation. Lorsque la cristallisation est stabilisée, on dirige le mélange billes/solution aqueuse vers une batterie de filtres où les filtres sont remplis et actionnés un à un pour que la solution aqueuse soit séparée, par pression, des billes de graisse, ces dernières étant ensuite mises sous pression pour que leur partie liquide soit exsudée.

Dans le procédé illustré à la figure 1, on introduit en 7, c'est-à-dire dans un cristalliseur, une quantité de solution aqueuse qui est déterminée par la concentration désirée du mélange formé par cette solution et les billes de graisse 4 qui y seront introduites, la température de la solution aqueuse étant, préalablement à cette introduction, ajustée à une température inférieure à celle du point de fusion de la graisse. Pour de la graisse de palmiste, la température de la solution aqueuse sera comprise entre 5° et 27°C et de préférence entre 8° et 20°C. La graisse est introduite dans cette solution aqueuse sous forme de billes homogènes dont le diamètre est compris entre 0,1 et 5 mm, mais qui est de préférence situé entre 1 et 3 mm. La concentration précitée des billes de graisse par rapport à la solution aqueuse sera de 10 à 70 %, et de préférence comprise, pour de la graisse de palmiste, entre 20 et 50 %. On maintient les billes de graisse en suspension dans la solution aqueuse, par un mouvement d'agitation, jusqu'à la fin de l'introduction desdites billes dans cette solution. Le mélange billes/solution aqueuse constitué, on maintient alors sa température entre 10° et 23°C, et de préférence entre 17° et 20°C, de façon à stabiliser la cristallisation de chaque bille du mélange. Ce maintien du mélange à température s'effectue en contrôlant de façon précise la température dudit mélange via celle d'un liquide de refroidissement 12 et dure entre 2 et 24 heures, et de préférence, pour de la graisse de palmiste, de 4 à 10 heures. Lorsque le mélange billes/solution aqueuse a été maintenu le temps voulu à température, il peut aisément être transféré soit par pompage, comme montré à la figure 1, soit par différence de pression, dans le filtre 10, qui sera décrit ci-après, préalablement amené à une température proche de celle du mélange; filtre dans lequel la solution aqueuse sera tout d'abord séparée du mélange à une pression comprise entre 100 à 400 KPa pour être recyclée en 11, la partie liquide des billes de graisse étant alors exsudée à une pression comprise entre 1500 à 7000 KPa et de préférence, pour de la graisse de palmiste, de 2000 à 4000 KPa.

Comme solution aqueuse, on peut utiliser simplement de l'eau, mais pour éviter, d'une part, la saponification intempestive des acides gras libres contenus dans la graisse et, d'autre part, l'agglomération des billes de graisses entre elles, on prévoit une solution aqueuse contenant un acide et un agent tensioactif. On dose cet acide dans la solution avant d'y introduire les billes de graisse, de manière à obtenir un pH situé entre 6,8 et 7,0 et on maintient cette acidité faible de ladite solution. On préférera, pour son effet antioxydant, l'acide citrique, bien qu'il n'y ait aucun inconvénient à utiliser d'autres acides plus économiques. En ce qui concerne l'agent tensioactif, on choisira avantageusement, pour de la graisse de palmiste, un émulsifiant du type anionique, cationique ou zwitterionique ou non ionique.

Suivant l'invention, et comme montré aux dessins, l'installation pour la mise en oeuvre du procédé susdit comprend une enceinte à cristalliser 13 raccordée à une source 14 de graisses fondues, à une source 15' de solution aqueuse agencée pour que la température de la solution soit réglable et à un filtre-presse 10 équipé de plateaux dont les parois sont agencées pour pouvoir être portées à une température déterminée. Des moyens 15 sont disposés dans l'enceinte 13, à proximité de l'endroit 16 où la graisse fondue est introduite dans celle-ci, et sont agencés pour diviser cette graisse en billes 4. Des moyens 6 sont agencés pour régler, d'une part, le débit d'introduction de la graisse fondue dans l'enceinte 13 et, d'autre part, la concentration des billes de graisse dans la solution aqueuse. Des moyens 17 sont agencés dans l'enceinte 13 pour maintenir les billes de graisse en suspension dans la solution aqueuse, tandis que des moyens 18 sont prévus dans l'enceinte et connectés à une source externe 12 de fluide réfrigérant pour maintenir la température du mélange billes de graisse/solution aqueuse à une valeur déterminée, des moyens 19 étant agencés pour assurer le transfert dudit mélange de l'enceinte 13 dans le filtre 10 dont les parois sont tempérées par un fluide réfrigérant contenu dans un réservoir 20 et mis en circulation par une pompe 21. Des moyens 60 sont en outre prévus pour recycler la solution aqueuse, séparée des billes de graisse dans le filtre, vers la source 15' de solution aqueuse.

Bien que l'on puisse utiliser n'importe quel type d'enceinte à cristalliser, il est avantageux d'employer une enceinte à cristalliser 13 représentée aux figures 1 et 2 et qui est du type cuve cylindrique, d'axe vertical et à paroi isolée 22, dans laquelle l'introduction de la graisse fondue s'effectue, en 16, à la base, cette cuve comprenant, sur une partie importante de sa hauteur, d'une part, un échangeur de chaleur 23 coaxial à la cuve qui constitue les moyens 18 susdits pour maintenir la température du mélange billes de graisse/solution aqueuse à une valeur déterminée et, d'autre part, un agitateur 24 formé par un arbre monté sur la cuve pour que son axe de son arbre 25 soit confondu avec l'axe de la cuve. Des pales 26, de préférence orientables, sont régulièrement réparties suivant le sens de la longueur de l'arbre et suivant des plans passant par l'axe de cet arbre, ledit agitateur constituant les moyens 17 précités pour maintenir les billes de graisse en suspension dans la solution aqueuse. Les moyens 15 précités, agencés pour diviser la graisse fondue en billes, sont constitués, dans l'enceinte 13, montrée aux figures 1 et 2, par une plaque régulièrement perforée 27 qui est fixée, par son pourtour, dans la partie inférieure de la cuve à la paroi interne de cette dernière, cette plaque 27 qui est plane et perpendiculaire à l'axe de la cuve pourrait également, suivant l'invention, être bombée, soit convexe soit concave, les dimensions des perforations 28 étant choisies en fonction du volume désiré pour les billes 4. Le liquide de refroidissement, qui circule dans l'échangeur de chaleur 23 est constamment contrôlé en température, comme en débit par la pompe 29. Ce liquide sera le plus souvent de l'eau ou, lorsque la température l'exige, un mélange d'eau et de propylène glycol.

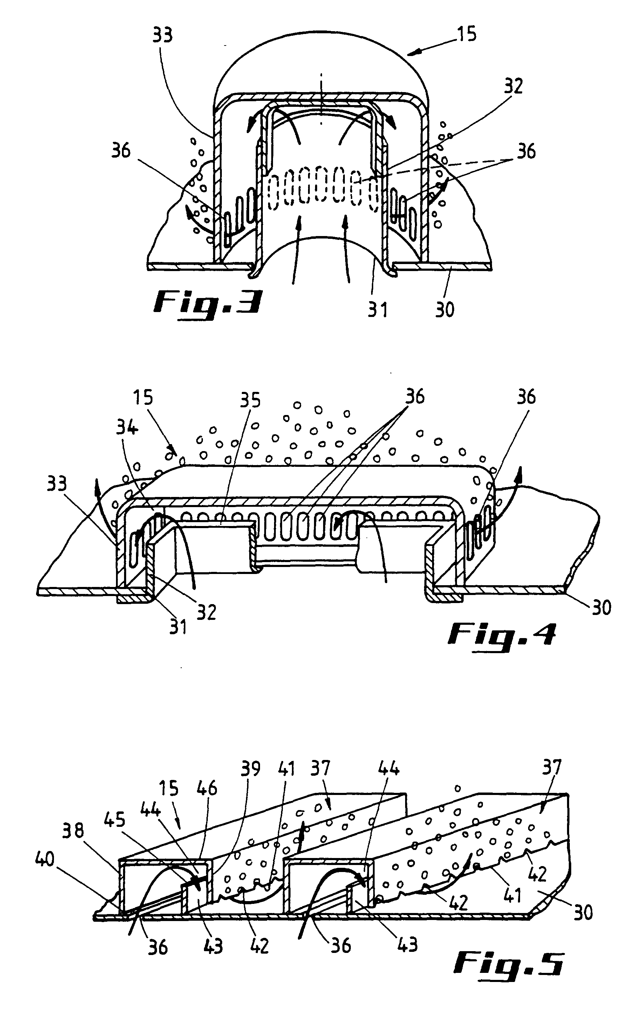

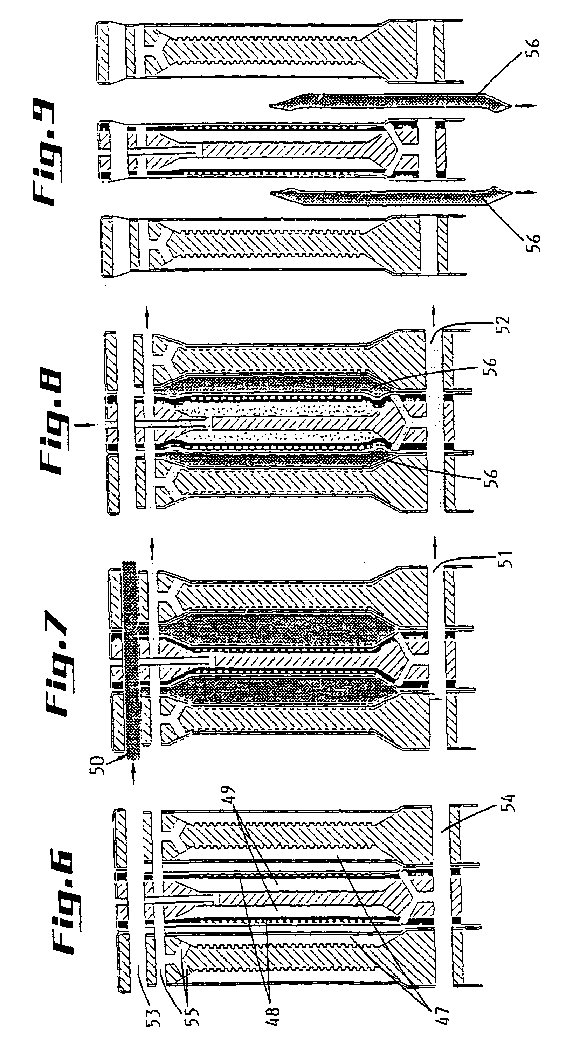

Comme montré aux figures 3 et 4, les moyens 15 précités, agencés pour diviser la graisse fondue en billes, peuvent également être du type cloche, circulaire ou longitudinale, disposés sur une plaque 30 fixée à l'intérieur de la cuve perpendiculairement à son axe et pourvue d'une ouverture centrale 31. Un conduit 32, ouvert à ses deux extrémités, est fixé sur le pourtour de cette ouverture 31 de manière à s'étendre au-dessus de ladite plaque 30, une cloche 33, fixée également à ladite plaque, coiffant le conduit 32 de manière à ce qu'un espace 34 subsiste entre l'extrémité supérieure 35 dudit conduit et la cloche 33, cette dernière présentant des perforations régulières 36, sur tout son pourtour, dans sa zone comprise entre le niveau de la plaque 30 et celui de la partie supérieure du conduit 32. Comme montré à la figure 5, ces moyens 15 pourraient également être constitués par une plaque plane 30 fixée à l'intérieur de la cuve perpendiculairement à son axe et présentant des ouvertures allongées 36 parallèles. Chacune de ces ouvertures 36 est coiffée par une boîte 37 de section en U dont les hauteurs des ailes 38 et 39 sont inégales, cette boîte étant fixée à la face supérieure de la plaque 30 par le bord libre 40 de son aile 38 de plus grande longueur tandis que le bord libre 41 de son aile 39 de longueur moindre présente des échancrures 42 régulièrement réparties sur toute sa longueur. Cette boîte 37 comprend, entre les deux ailes 38 et 39 du U et parallèlement à celles-ci, une cloison verticale plane 43 fixée à la plaque précitée et disposée entre l'ouverture allongée 36 susdite et l'aile du U 39 de plus faible hauteur, la hauteur de cette cloison 43 étant telle qu'un espace 44 subsiste entre son bord supérieur 45 et l'âme 46 du U.

Le filtre 10 dont un élément est schématisé aux figures 6 à 9 est un filtre-presse à plateaux chambrés connu en soi, chaque chambre 47 d'un élément du filtre étant muni d'une membrane souple 48, derrière laquelle en 49, il est possible d'introduire un fluide sous pression.

Les séquences des opérations du filtre sont les suivantes :
- Alimentation du filtre en mélange billes de graisse/solution aqueuse, en 50 (Figure 7), filtration de la masse des billes de graisse en suspension, puis montée à une pression de 1 à 4 bars pour extraire la solution aqueuse qui est immédiatement récupérée, en 51, pour être réutilisée en 11.
- Compaction de chaque chambre 47 en portant l'arrière de chaque membrane 48 à une pression comprise entre 15 à 70 bars, pendant laquelle la partie liquide de la graisse est exsudée, en 52, et laisse dans chaque chambre 47 un gâteau de produit 56 à point de fusion élevé (Figure 8).
- Soufflage des conduits 53 d'alimentation en mélange billes/solution aqueuse.
- Soufflage des conduits 54 de sortie du filtrat.
- Evacuation du circuit 55 de mise sous pression des membranes 48.
- Débâtissage des gâteaux 56 (Figure 9).
- Fermeture du filtre et préparation de celui-ci au transfert d'une nouvelle quantité du mélange susdit, après un éventuel cycle de lavage.

Il doit être entendu que l'invention n'est nullement limitée aux formes de réalisation décrites et que bien des modifications peuvent être apportées à ces dernières sans sortir du cadre du présent brevet.

Bien entendu toute matière grasse autre qu'une graisse laurique pourrait être traitée de la même façon ou d'une façon sensiblement similaire au procédé illustré. C'est ainsi que l'utilisation de la solution aqueuse composée d'eau et d'acide pour éviter la saponification des acides gras libres de la graisse ne se conçoit évidemment que dans le cas du traitement d'une graisse.

## Revendications

1. Procédé de cristallisation de matières grasses, en particulier de graisses lauriques et d'acides gras lauriques ou non pour leur fractionnement ultérieur notamment par filtrage sous pression, **caractérisé en ce qu'**il consiste à fondre les matières grasses, à diviser la masse fondue en billes les plus homogènes possibles et de dimensions les plus régulières possibles, à introduire ces billes dans une solution aqueuse préalablement réfrigérée à une température inférieure à celle du point de fusion de la matière grasse, à ajuster la concentration de matière grasse par rapport à la solution aqueuse en fonction de la capacité de celle-ci à absorber la quantité de chaleur nécessaire à la solidification des billes de matière grasse, à régler le débit d'introduction desdites billes dans la solution précitée pour que chaque bille de matière grasse soit soumise instantanément à un échange thermique billes/solution aqueuse qui provoque rapidement la solidification de la surface des billes et progressivement de toute leur masse, à maintenir les billes de matière grasse en suspension dans ladite solution aqueuse, à ajuster la température du mélange billes/solution pour permettre la stabilisation de la cristallisation de chaque bille, à maintenir ladite température du mélange jusqu'à la stabilisation complète de la cristallisation susdite, à transférer ensuite le mélange billes/solution à l'endroit de filtrage dont les surfaces en contact avec ledit mélange sont maintenues à une température proche de celle de ce dernier, à séparer sous faible pression les billes de matière grasse de la solution aqueuse et à extraire enfin desdites billes de matière grasse, sous forte pression, la partie liquide de la matière grasse.

2. Procédé suivant la revendication 1, **caractérisé en ce qu'**on effectue la cristallisation des matières grasses en discontinu en introduisant un volume donné de billes de matière grasse dans un volume donné de solution aqueuse.

3. Procédé suivant la revendication 1, **caractérisé en ce qu'**on effectue la cristallisation des matières grasses en continu en faisant circuler la solution aqueuse précitée à contre-courant par rapport au flux de billes de matière grasse.

4. Procédé suivant l'une quelconque des revendications 1 à 3, **caractérisé en ce qu'**on divise la masse de matière grasse fondue en billes dont le diamètre est compris entre 0,1 et 5 mm.

5. Procédé suivant la revendication 4, **caractérisé en ce que** le diamètre des billes est compris entre 1 et 3 mm.

6. Procédé suivant l'une quelconque des revendications 1 à 5, **caractérisé en ce que** l'on introduit les billes de matière grasse, telle que graisse de palmiste, dans une solution aqueuse dont la température est comprise entre 5 et 27°C.

7. Procédé suivant la revendication 6, **caractérisé en ce que** la température de la solution aqueuse est comprise entre 8 et 20°C.

8. Procédé suivant l'une quelconque des revendications 1 à 7, **caractérisé en ce que** la solution aqueuse susdite est constituée d'eau.

9. Procédé suivant la revendication 6, **caractérisé en ce que**, pour éviter la saponification des acides gras libres contenus dans les billes de graisse, la solution aqueuse susdite est composée d'eau et d'acide.

10. Procédé suivant la revendication 9, **caractérisé en ce que** l'on dose l'acide dans l'eau, avant l'introduction des billes de graisse dans la solution aqueuse, pour que le pH de cette solution soit compris entre 6,8 et 7,0.

11. Procédé suivant l'une ou l'autre des revendications 9 et 10, **caractérisé en ce que** l'on utilise, pour son effet antioxydant, de l'acide citrique.

12. Procédé suivant l'une quelconque des revendications 1 à 11, **caractérisé en ce que**, pour maintenir dans la solution aqueuse l'homogénéité de chaque bille de matière grasse et éviter l'agglomération de ces billes entre elles, ladite solution aqueuse comprend un agent tensioactif.

13. Procédé suivant la revendication 12, **caractérisé en ce que** l'on choisit, comme agent tensioactif, un émulsifiant du type anionique, cationique ou zwitterionique ou non ionique.

14. Procédé suivant l'une quelconque des revendications 1 à 13, **caractérisé en ce qu'**on maintient les billes de matière grasse en suspension dans la solution aqueuse en provoquant dans le mélange billes/solution un mouvement d'agitation.

15. Procédé suivant la revendication 6, **caractérisé en ce que**, pendant la cristallisation des billes de graisse, on maintient la température du mélange billes de graisse/solution aqueuse entre 10° et 23°C.

16. Procédé suivant la revendication 15, **caractérisé en ce que** la température du mélange billes de graisse/solution aqueuse est maintenue entre 17° et 20°C.

17. Procédé suivant l'une quelconque des revendications 1 à 16, **caractérisé en ce qu'**on introduit une quantité de billes de matière grasse dans la solution aqueuse pour obtenir une concentration de 10 à 70 % de matière grasse par rapport à ladite solution aqueuse.

18. Procédé suivant la revendication 17, **caractérisé en ce que** la quantité de billes de matière grasse introduite dans la solution aqueuse est telle que la concentration précitée est comprise entre 20 et 50 %.

19. Procédé suivant l'une quelconque des revendications 1 à 18, **caractérisé en ce qu'**on maintient la température du mélange billes de matière grasse/solution aqueuse, afin d'assurer la solidification totale desdites billes, pendant une durée comprise entre 2 et 24 heures.

20. Procédé suivant la revendication 19, **caractérisé en ce que** la durée de maintien de la température du mélange est comprise entre 4 et 10 heures.

21. Procédé suivant l'une quelconque des revendications 1 à 20, **caractérisé en ce que** l'on sépare, par filtrage, la solution aqueuse des billes de matière grasse à une pression comprise entre 100 à 400 KPa.

22. Procédé suivant l'une quelconque des revendications 1 à 21, **caractérisé en ce que**, après séparation des billes de matière grasse de la solution précitée, on soumet les billes de matière grasse à une pression comprise entre 1500 et 7000 KPa pour que la partie liquide de la matière grasse soit exsudée et filtrée, avec comme résidu un gâteau de produit à point de fusion élevé.

23. Procédé suivant la revendication 22, **caractérisé en ce que** la pression à laquelle sont soumises les billes de matière grasse est comprise entre 2000 et 4000 KPa.

24. Procédé suivant l'une quelconque des revendications 1 à 23, **caractérisé en ce qu'**on recycle la solution aqueuse après séparation de celle-ci du mélange susdit billes de matière grasse/solution aqueuse.

25. Installation pour la mise en oeuvre du procédé suivant l'une quelconque des revendications 1 à 24, **caractérisée en ce qu'**elle comprend une enceinte à cristalliser (13) raccordée à une source (14) de matières grasses fondues, à une source (15') de solution aqueuse agencée pour que la température de la solution soit réglable et à un filtre-presse (10), équipé de plateaux dont les parois sont agencées pour pouvoir être portées à une température déterminée, des moyens (15) disposés dans l'enceinte (13), à proximité de l'endroit (16) où la matière grasse fondue est introduite dans celle-ci, et agencés pour diviser cette matière grasse en billes, des moyens (6) agencés pour régler le débit d'introduction de la matière grasse fondue dans l'enceinte (13) et la concentration des billes de matière grasse dans la solution aqueuse, des moyens (17) agencés dans l'enceinte (13) pour maintenir les billes de matière grasse (4) en suspension dans la solution aqueuse, des moyens (18) prévus dans l'enceinte, connectés à une source externe (12) de fluide réfrigérant, qui sont agencés pour maintenir la température du mélange billes de matière grasse/solution aqueuse à une valeur déterminée et des moyens (19) agencés pour permettre le transfert du mélange susdit de l'enceinte au filtre.

26. Installation suivant la revendication 25, **caractérisée en ce que** le filtre et la source de solution aqueuse comprennent des moyens (60) agencés pour permettre le recyclage de la solution aqueuse filtrée.

27. Installation suivant l'une ou l'autre des revendications 25 et 26, **caractérisée en ce que** l'enceinte à cristalliser (13) susdite est du type cuve cylindrique, d'axe vertical et à paroi isolée (22), dans laquelle l'introduction de la matière grasse fondue s'effectue à la base, cette cuve comprenant, sur une partie importante de sa hauteur, d'une part, un échangeur de chaleur (23) coaxial à la cuve qui constitue les moyens (18) susdits pour maintenir la température du mélange billes de matière grasse/solution aqueuse à une valeur déterminée et, d'autre part, un agitateur (24) formé par un arbre (25) monté sur la cuve pour que son axe soit confondu avec l'axe de la cuve, des pales (16), de préférence orientables, étant régulièrement réparties suivant le sens de la longueur de l'arbre (25) et suivant des plans passant par l'axe de cet arbre, ledit agitateur constituant les moyens (17) précités pour maintenir les billes de matière grasse en suspension dans la solution aqueuse.

28. Installation suivant la revendication 27, **caractérisée en ce que** les moyens (15) précités agencés pour diviser la matière grasse fondue en billes sont constitués par une plaque régulièrement perforée (27) qui est fixée, par son pourtour, dans la partie inférieure de la cuve à la paroi interne de cette dernière, cette plaque (27) étant soit plane et perpendiculaire à l'axe de la cuve, soit bombée - convexe ou concave, les dimensions des perforations (28) étant choisies en fonction du volume désiré pour les billes.

29. Installation suivant la revendication 27, **caractérisée en ce que** les moyens précités (15) agencés pour diviser la matière grasse fondue en billes (4) sont du type cloche, circulaire ou longitudinale, disposés sur une plaque (30) fixée à l'intérieur de la cuve perpendiculairement à son axe et pourvue d'une ouverture centrale (31), un conduit (32), ouvert à ses deux extrémités, étant fixé à cette ouverture (31) de manière à s'étendre au-dessus de ladite plaque (30), une cloche (33), fixée également à cette plaque, coiffant le conduit (32) de manière à ce qu'un espace (34) subsiste entre l'extrémité supérieure (35) dudit conduit et la cloche (34), cette dernière étant régulièrement perforée, (en 36), sur tout son pourtour dans sa zone comprise entre le niveau de la plaque (30) et celui de la partie supérieure (35) du conduit (32).

30. Installation suivant la revendication 27, **caractérisée en ce que** les moyens précités agencés pour diviser la matière grasse fondue en billes comprennent une plaque plane fixée à l'intérieur de la cuve perpendiculairement à son axe et présentant des ouvertures allongées (36) parallèles, chacune de ces ouvertures étant coiffée par une boîte (37) de section en U dont les hauteurs des ailes (38, 39) sont inégales, cette boîte étant fixée à la face supérieure de la plaque (30) par le bord libre (40) de son aile (38) de plus grande longueur tandis que le bord libre (41) de son aile (39) de longueur moindre présente des échancrures (42) régulièrement réparties sur toute sa longueur, ladite boîte (37) comprenant, entre les deux ailes du U et parallèlement à celles-ci, une cloison plane (43) fixée à la plaque précitée et disposée entre l'ouverture allongée (36) susdite et l'aile (39) du U de plus faible hauteur, la hauteur de cette cloison (43) étant telle qu'un espace (44) subsiste entre son bord supérieur (45) et l'âme (46) du U.

31. Installation suivant l'une quelconque des revendications 25 à 30, **caractérisée en ce que** le filtre (10) est du type filtre-presse équipé de plateaux à membranes connu en soi.

## Patentansprüche

1. Verfahren zur Kristallisation von Fetten, insbesondere von Laurinfetten und Laurin- oder Nicht-Laurin-Fettsäuren für deren spätere Fraktionierung, insbesondere durch Filtern unter Druck, **dadurch gekennzeichnet, dass** es darin besteht, die Fette zu schmelzen, die geschmolzene Masse in Kügelchen zu zerteilen, die so homogen als möglich und von Abmessungen sind, die so regelmäßig als möglich sind, diese Kügelchen in eine wässrige Lösung einzuführen, die zuvor auf eine Temperatur kleiner als diejenige des Schmelzpunkts des Fettes gebracht wurde, die Fettkonzentration bezüglich der wässrigen Lösung anzupassen in Abhängigkeit der Kapazität von dieser, die Wärmemenge zu absorbieren, die notwendig ist zur Verfestigung der Fettkügelchen, die Einführmenge der Kügelchen in die oben genannte Lösung zu steuern, damit jedes Fettkügelchen augenblicklich einem Wärmeaustausch Kügelchen/wässrige Lösung unterzogen wird, der schnell die Verfestigung der Oberfläche der Kügelchen und progressive ihrer gesamten Masse erzeugt, die Fettkügelchen in Suspension in der wässrigen Lösung zu halten, die Temperatur der Mischung Kügelchen/Lösung anzupassen, um die Stabilisierung der Kristallisation jedes Kügelchens zu ermöglichen, die Temperatur der Mischung bis zur vollständigen Stabilisierung der oben genannten Kristallisation zu halten, dann die Mischung Kügelchen/Lösung an den Ort des Filterns zu transferieren, wobei die Oberflächen in Kontakt mit der Mischung auf einer Temperatur nahe derjenigen von letzterer gehalten werden, die Fettkügelchen unter geringem Druck von der wässrigen Lösung zu trennen und schließlich aus den Fettkügelchen, unter starkem Druck, den flüssigen Teil des Fettes zu extrahieren.

2. Verfahren nach Anspruch 1, **dadurch gekennzeichnet, dass** man die Kristallisation der Fette diskontinuierlich durch Einführen eines vorgegebenen Volumens von Fettkügelchen in ein vorgegebenes Volumen wässriger Lösung durchführt.

3. Verfahren nach Anspruch 1, **dadurch gekennzeichnet, dass** man die Kristallisation der Fette kontinuierlich durchführt, indem man die oben genannte wässrige Lösung im Gegenstrom bezüglich dem Fluss von Fettkügelchen zirkulieren lässt.

4. Verfahren nach einem der Ansprüche 1 bis 3, **dadurch gekennzeichnet, dass** man die geschmolzene Fettmasse in Kügelchen mit einem Durchmesser zwischen 0,1 und 5 mm teilt.

5. Verfahren nach Anspruch 4, **dadurch gekennzeichnet, dass** der Durchmesser der Kügelchen zwischen 1 und 3 mm beträgt.

6. Verfahren nach einem der Ansprüche 1 bis 5, **dadurch gekennzeichnet, dass** man die Fettkügelchen, wie Palminfett, in eine wässrige Lösung einführt, deren Temperatur zwischen 5 und 27°C beträgt.

7. Verfahren nach Anspruch 6, **dadurch gekennzeichnet, dass** die Temperatur der wässrigen Lösung zwischen 8 und 20°C beträgt.

8. Verfahren nach einem der Ansprüche 1 bis 7, **dadurch gekennzeichnet, dass** die oben genannte wässrige Lösung aus Wasser besteht.

9. Verfahren nach Anspruch 6, **dadurch gekennzeichnet, dass**, zum Vermeiden der Verseifung der in den Fettkügelchen enthaltenen freien Fettsäuren, die oben genannte wässrige Lösung aus Wasser und Säure besteht.

10. Verfahren nach Anspruch 9, **dadurch gekennzeichnet, dass** man, vor dem Einführen der Fettkügelchen in die wässrige Lösung, die Säure dem Wasser zumisst, damit der pH dieser Lösung zwischen 6,8 und 7,0 beträgt.

11. Verfahren nach Anspruch 9 oder 10, **dadurch gekennzeichnet, dass** man, wegen ihrer Antioxidationswirkung, Zitronensäure verwendet.

12. Verfahren nach einem der Ansprüche 1 bis 11, **dadurch gekennzeichnet, dass**, um in der wässrigen Lösung die Homogenität jedes Fettkügelchens zu halten und eine Agglomeration dieser Kügelchen untereinander zu vermeiden, die wässrige Lösung einen grenzflächenaktiven Stoff enthält.

13. Verfahren nach Anspruch 12, **dadurch gekennzeichnet, dass** man als grenzflächenaktiven Stoff einen Emulgator anionischer, kationischer oder zwitterionischer oder aber nichtionischer Art wählt.

14. Verfahren nach einem der Ansprüche 1 bis 13, **dadurch gekennzeichnet, dass** man die Fettkügelchen in Suspension in der wässrigen Lösung hält, indem man in der Mischung Kügelchen/Lösung eine Rührbewegung erzeugt.

15. Verfahren nach Anspruch 6, **dadurch gekennzeichnet, dass** man, während der Kristallisation der Fettkügelchen, die Temperatur der Mischung Fettkügelchen/wässrige Lösung zwischen 10° und 23°C hält.

16. Verfahren nach Anspruch 15, **dadurch gekennzeichnet, dass** die Temperatur der Mischung Fettkügelchen/wässrige Lösung zwischen 17° und 20°C gehalten wird.

17. Verfahren nach einem der Ansprüche 1 bis 16, **dadurch gekennzeichnet, dass** man eine Menge von Fettkügelchen in die wässrige Lösung einführt, um eine Konzentration von 10 bis 70 % Fettanteil bezüglich der wässrigen Lösung zu erhalten.

18. Verfahren nach Anspruch 17, **dadurch gekennzeichnet, dass** die Menge an in die wässrige Lösung eingeführten Fettkügelchen so ist, dass die oben genannte Konzentration zwischen 20 und 50 % beträgt.

19. Verfahren nach einem der Ansprüche 1 bis 18, **dadurch gekennzeichnet, dass** man die Temperatur der Mischung Fettkügelchen/wässrige Lösung, um die totale Verfestigung der Kügelchen zu gewährleisten, während einer Dauer zwischen 2 und 24 Stunden hält.

20. Verfahren nach Anspruch 19, **dadurch gekennzeichnet, dass** die Dauer während der die Temperatur der Mischung gehalten wird, zwischen 4 und 10 Stunden beträgt.

21. Verfahren nach einem der Ansprüche 1 bis 20, **dadurch gekennzeichnet, dass** man durch Filtern die wässrige Lösung von den Fettkügelchen bei einem Druck zwischen 100 und 400 KPa trennt.

22. Verfahren nach einem der Ansprüche 1 bis 21, **dadurch gekennzeichnet, dass** man, nach dem Trennen der Fettkügelchen von der oben genannten Lösung, die Fettkügelchen einem Druck zwischen 1500 und 7000 KPa unterzieht, camit der flüssige Teil des Fettes ausgeschwitzt und gefiltert wird, mit einem Produktkuchen mit hohem Schmelzpunkt als Rückstand.

23. Verfahren nach Anspruch 22, **dadurch gekennzeichnet, dass** der Druck, dem die Fettkügelchen unterworfen werden, zwischen 2000 und 4000 KPa beträgt.

24. Verfahren nach einem der Ansprüche 1 bis 23, **dadurch gekennzeichnet, dass** man die wässrige Lösung nach Trennen von dieser von der oben genannten Mischung Fettkügelchen/wässrige Lösung recycelt.

25. Einrichtung zum Einsatz des Verfahrens nach einem der Ansprüche 1 bis 24, **dadurch gekennzeichnet, dass** sie umfasst: einen Raum zum Kristallisieren (13), der verbunden ist mit einer Quelle (14) von geschmolzenen Fetten, mit einer Quelle (15') einer wässrigen Lösung, die so eingerichtet ist, dass die Temperatur der Lösung einstellbar ist, und mit einer Filterpresse (10), die mit Platten ausgestattet ist, deren Seitenwände so eingerichtet sind, dass sie auf eine bestimmte Temperatur gebracht werden können, Mittel (15), die in dem Raum (13) in der Nähe der Stelle (15), wc das geschmolzene Fett in diesen eingeführt wird, angeordnet und so eingerichtet sind, um dieses Fett in Kügelchen zu teilen, Mittel (6), die so eingerichtet sind, um die Einführmenge des geschmolzenen Fettes in den Raum (13) und die Konzentration der Fettkügelchen in der wässrigen Lösung zu steuern, Mittel (17), die in dem Raum (13) eingerichtet sind, um die Fettkugelchen (4) in Suspension in der wässrigen Lösung zu halten, in dem Raum vorgesehene, mit einer äußeren Quelle (12) von Kühlmittel verbundene Mittel (18), die so eingerichtet sind, dass sie die Temperatur der Mischung Fettkügelchen/wässrige Lösung auf einem bestimmten Wert halten, und Mittel (19), die so eingerichtet sind, dass sie den Transfer der oben genannten Mischung von dem Raum zum Filter ermöglichen.

26. Einrichtung nach Anspruch 25, **dadurch gekennzeichnet, dass** der Filter und die Quelle wässriger Lösung Mittel (60) umfassen, die so eingerichtet sind, dass sie das Recyceln der gefilterten wässrigen Lösung ermöglichen.

27. Einrichtung nach Anspruch 25 oder 26, **dadurch gekennzeichnet, dass** der oben genannte Raum zum Kristallisieren (13) von der Art mit zylindrischem Gefäß, vertikaler Achse und isolierter Seitenwand (22) ist, in den das Einführen des geschmolzenen Fettes am Boden erfolgt, wobei dieses Gefäß, auf einem großen Teil seiner Höhe, einerseits einen zu dem Gefäß koaxial verlaufenden Wärmetauscher (23), der die oben erwähnten Mittel (18) bildet, um die Temperatur der Mischung Fettkügelchen/wässrige Lösung auf einem bestimmten Wert zu halten, und, andererseits, einen Rührer (24) umfasst, der durch einen Arm (25) gebildet ist, der auf dem Gefäß befestigt ist, damit seine Achse mit der Achse des Gefäßes zusammenläuft, wobei vorzugsweise ausrichtbare Flügel (16) regelmäßig in Richtung der Lange des Arms (25) und in durch die Achse dieses Arms verlaufende Ebenen unterteilt sind, wobei der Rührer die oben genannten Mittel (17) bildet, um die Fettkügelchen in Suspension in der wässrigen Lösung zu halten.

28. Einrichtung nach Anspruch 27, **dadurch gekennzeichnet, dass** die oben erwähnten Mittel (15) zum Teilen des geschmolzenen Fettes in Kügelchen durch eine regelmäßig perforierte Platte (27) gebildet sind, die an ihrem Rand im unteren Teil des Gefäßes an der Innenwand von letzterem befestigt ist, wobei diese Platte (27) entweder eben und senkrecht zur Gefäßachse oder - konvex oder konkav - gewölbt ist, wobei die Abmessungen der Perforationen (28) in Abhängigkeit des für die Kügelchen gewünschten Volumens ausgewählt sind.

29. Einrichtung nach Anspruch 27, **dadurch gekennzeichnet, dass** die oben erwähnten Mittel (15), eingerichtet zum Teilen des geschmolzenen Fettes in Kügelchen (4), glockenförmig, kreisförmig oder länglich sind, und auf einer Platte (30) angeordnet sind, die im Inneren des Gefäßes senkrecht zu seiner Achse befestigt und mit einer zentralen Öffnung (31) versehen ist, wobei eine an ihren beiden Enden offene Leitung (32) an dieser Öffnung (31) befestigt ist, derart, dass sie sich über die Platte (30) erstreckt, wobei eine auch an dieser Platte befestigte Glocke (33) die Leitung (32) so bedeckt, dass ein Abstand (34) zwischen dem oberen Ende (35) der Leitung und der Glocke (33) bleibt, wobei letztere regelmäßig perforiert (in 36) ist auf ihrem gesamten Rand in ihrem Bereich zwischen der Höhe der Platte (30) und dem des oberen Teils (35) der Leitung (32).

30. Einrichtung nach Anspruch 27, **dadurch gekennzeichnet, dass** die oben erwähnten, zum Teilen des geschmolzenen Fettes in Kügelchen eingerichteten Mittel eine ebene Platte aufweisen, die im Inneren des Gefäßes, senkrecht zu seiner Achse angebracht ist und parallele längliche Öffnungen (36) aufweist, wobei jede dieser Öffnungen durch einen Kasten (37) mit einem Querschnitt in Form eines U bedeckt ist, dessen Flügelhöhen (38, 39) ungleich sind, wobei dieser Kasten an der Oberseite der Platte (30) durch den freien Rand (40) seines Flügels mit größerer Länge befestigt ist, während der freie Rand (41) seines Flügels (39) mit geringerer Länge bogenförmige Ausschnitte (42) aufweist, die auf seiner gesamten Länge regelmäßig unterteilt sind, wobei der Kasten (37), zwischen den beiden Flügeln des U und parallel zu diesen, eine ebene Trennwand (43) aufweist, die an der oben erwähnten Platte befestigt und zwischen der oben genannten länglichen Öffnung (36) und dem Flügel (39) des U mit geringerer Höhe angebracht ist, wobei die Höhe dieser Trennwand (43) derart ist, dass ein Abstand (44) zwischen ihrem oberen Rand (45) und dem Steg (46) des U bleibt.

31. Einrichtung nach einem der Ansprüche 25 bis 30, **dadurch gekennzeichnet, dass** der Filter (10) von der Art Filterpresse ist, die mit Platten mit an sich bekannten Membranen ausgestattet ist.

## Claims

1. A process for crystallising fatty substances, in particular lauric fats and lauric or non-lauric fatty acids for their subsequent fractionation especially by pressure filtering, **characterized in that** it consists in melting the fatty substances, dividing the molten mass into beads which are as homogeneous as possible and which have dimensions as regular as possible, feeding these beads into an aqueous solution refrigerated previously to a temperature lower than the melting point of the fatty substance, adjusting the concentration of the fatty substance relative to the aqueous solution in function of the capacity of this solution to absorb the amount of heat required for solidifying the fatty substance beads, controlling the feed rate of said beads into said solution in order that each fatty substance bead is subjected instantaneously to a beads/aqueous solution heat exchange which causes the surface of the beads to solidify quickly and progressively the entire mass thereof, maintaining the fatty substance beads in suspension in said aqueous solution, adjusting the temperature of the beads/solution mixture to enable the crystallisation of each bead to stabilise, maintaining said mixture temperature until said crystallisation is completely stabilised, subsequently transferring the beads/solution mixture to the filtration location whose surfaces which come into contact with said mixture are kept at a temperature near the temperature of the mixture, separating the fatty substance beads under a low pressure from the aqueous solution, and finally extracting from said fatty substance beads, under a high pressure, the liquid portion of the fatty substance.

2. A process according to claim 1, **characterised in that** the fatty substances are crystallised discontinuously by feeding a given fatty substance beads volume into a given aqueous solution volume.

3. A process according to claim 1, **characterised in that** the fatty substances are crystallised continuously by circulating said aqueous solution in counter-current with respect to the flux of fatty substance beads.

4. A process according to any one of the claims 1 to 3, **characterised in that** the molten fatty substance mass is divided into beads having a diameter comprised between 0.1 and 5 mm.

5. A process according to claim 4, **characterised in that** the diameter of the beads is comprised between 1 and 3 mm.

6. A process according to any one of the claims 1 to 5, **characterised in that** the beads of fatty substance, such as palm fat, are fed into an aqueous solution whose temperature is comprised between 5 and 27°C.

7. A process according to claim 6, **characterised in that** the temperature of the aqueous solution is comprised between 8 and 20°C.

8. A process according to any one of the claims 1 to 7, **characterised in that** said aqueous solution consists of water.

9. A process according to claim 6, **characterised in that**, in order to avoid saponification of the free fatty acids contained in the fat beads, said aqueous solution is composed of water and an acid.

10. A process according to claim 9, **characterised in that**, before feeding the fat beads into the aqueous solution, the acid is dosed in the water so that the pH of this solution is comprised between 6.8 and 7.0.

11. A process according to either one of the claims 9 and 10, **characterised in that** use is made, for its anti-oxidising effect, of citric acid.

12. A process according to any one of the claims 1 to 11, **characterised in that**, in order to maintain the homogeneity of each fatty substance bead in the aqueous solution and to avoid mutual agglomeration of these beads, said aqueous solution comprises a surfactant.

13. A process according to claim 12, **characterised in that** there is chosen, as surfactant, an emulsifier of the anionic, cationic of zwitterionic or non-ionic type.

14. A process according to any one of the claims 1 to 13, **characterised in that** the fatty substance beads are kept in suspension in the aqueous solution, by agitating the beads/solution mixture.

15. A process according to claim 6, **characterised in that**, during the crystallisation of the fat beads, the temperature of the fat beads/aqueous solution mixture is maintained between 10° and 23°C.

16. A process according to claim 15, **characterised in that** the temperature of the fat beads/aqueous solution mixture is maintained between 17° and 20°C.

17. A process according to any one of the claims 1 to 16, **characterised in that** the fatty substance beads are fed in such an amount in the aqueous solution that a concentration of 10 to 70 % of fatty substance relative to said aqueous solution is obtained.

18. A process according to claim 17, **characterised in that** the amount of fatty substance beads fed into the aqueous solution is such that said concentration is comprised between 20 and 50 %.

19. A process according to any one of the claims 1 to 18, **characterised in that**, in order to assure the total solidification of said beads, the temperature of the fatty substance beads/aqueous solution mixture is maintained for a period comprised between 2 and 24 hours.

20. A process according to claim 19, **characterised in that** the period for which the temperature of the mixture is maintained is comprised between 4 and 10 hours.

21. A process according to any one of the claims 1 to 20, **characterised in that** the aqueous solution is separated, by filtering, from the fatty substance beads at a pressure comprised between 100 to 400 KPa.

22. A process according to any one of the claims 1 to 21, **characterised in that**, after having separated the fatty substance beads from said solution, the fatty substance beads are subjected to a pressure comprised between 1500 and 7000 KPa so as to exude and filter the liquid portion of the fatty substance leaving as residue a product cake with a high melting point.

23. A process according to claim 22, **characterised in that** the pressure at which the fatty substance beads are subjected is comprised between 2000 and 4000 KPa.

24. A process according to any one of the claims 1 to 23, **characterised in that** the aqueous solution is recycled after having separated it from said fatty substance beads/aqueous solution mixture.

25. An apparatus for carrying out the process according to any one of the claims 1 to 24, **characterised in that** it comprises a crystallisation chamber (13) connected to a source (14) of molten fatty substances, to a source (15') of aqueous solution adapted to make the temperature of the solution adjustable and to a filter press (10) equipped with plates the walls of which are arranged to be suited for being brought to a determined temperature, means (15) disposed within the chamber (13), near the location (16) where the molten fatty substance is fed therein, and arranged to divide this fatty substance into beads, means (6) arranged for controlling the feed rate of the molten fatty substance in the chamber (13) and the concentration of the fatty substance beads into the aqueous solution, means (17) arranged within the chamber (13) for maintaining the fatty substance beads (4) in suspension in the aqueous solution, means (18) provided within the chamber and connected to an external source (12) of cooling fluid, which means are arranged for maintaining the temperature of the fatty substance beads/aqueous solution mixture at a determined value, and means (19) arranged to enable said mixture to be transferred from the chamber to the filter.

26. An apparatus according to claim 25, **characterised in that** the filter and the aqueous solution source comprise means (60) arranged for allowing the filtered aqueous solution to be recycled.

27. An apparatus according to either one of the claims 25 and 26, **characterised in that** said crystallisation chamber (13) is of the cylindrical vessel type with a vertical axis and an insulated wall (22) wherein the molten fatty substance is fed at the bottom, which vessel comprises, over an important portion of its height, on the one hand, a heat exchanger (23) which is co-axial to the vessel and which forms said means (18) for maintaining the temperature of the fatty substance beads/aqueous solution mixture at a determined value and, on the other hand, an agitator (24) formed by a shaft (25) mounted on the vessel so that its axis coincides with the vessel axis, blades (16), which are preferably directional, being regularly distributed according to the longitudinal direction of the shaft (25) and according to planes passing through the axis of this shaft, said agitator forming said means (17) for maintaining the fatty substance beads in suspension in the aqueous solution.

28. An apparatus according to claim 27, **characterised in that** said means (15), arranged for dividing the molten fatty substance into beads, are formed by a regularly perforated plate (27) which is fixed, by its circumference, into the lower portion of the vessel to the inner wall thereof, this plate (27) being either flat and perpendicular to the vessel axis, or arched convex or concave, the dimensions of the perforations (28) being chosen in function of the desired bead volume.

29. An apparatus according to claim 27, **characterised in that** said means (15), arranged for dividing the molten fatty substance into beads (4), are of the circular or longitudinal bell-type and disposed onto a plate (30) fixed within the vessel at right angles to the axis thereof and provided with a central opening (31), a duct (32), which is open at its two extremities, being fixed to this opening (31) so as to extend above said plate (30), a bell (33), also fixed to this plate, capping the duct (32) in such a way that a space (34) remains between the upper extremity (35) of said duct and the bell (33), this bell being regularly perforated, (in 36), over its entire circumference in the zone thereof comprised between the level of the plate (30) and that of the upper part (35) of the duct (32).

30. An apparatus according to claim 27, **characterised in that** said means arranged for dividing the molten fatty substance into beads comprise a flat plate fixed within the vessel at right angles to the axis thereof and showing parallel elongated openings (36), each of these openings being capped by a box (37) having a U-shaped section with unequal heights of the flanges (38, 39), this box being fixed to the upper side of the plate (30) by the free edge (40) of its longest flange (38) whilst the free edge (41) of its shortest flange (39) shows notches (42) which are regularly divided over its entire length, said box (37) comprising between the two flanges of the U-shape and parallel thereto a flat partition (43) fixed to said plate and disposed between said elongated opening (36) and the lowest flange (39) of the U-shape, the height of this partition (43) being such that a space (44) remains between its upper edge (45) and the web (46) of the U.

31. An apparatus according to any one of the claims 25 to 30, **characterised in that** the filter (10) is of the filter-press type equipped with membrane plates known per se.
